# FASCICULE DE BREVET EUROPEEN

(11) **EP 1 785 671 B1**
(45) Date de publication et mention de la délivrance du brevet: **02.09.2015**
(21) Numéro de dépôt: 06124104.8
(22) Date de dépôt: 15.11.2006
(51) Int. Cl.: F23R 3/14, F23R 3/28, F23R 3/60

(54) **Fond de chambre de combustion avec ventilation**
Belüfteter Brennkammerdom
Ventilated combustor dome

(30) Priorité: 15.11.2005 FR 0511549
(43) Date de publication de la demande: 16.05.2007
(73) Titulaire: SNECMA, 75015 Paris (FR)
(72) Inventeur: BIEBEL, Romain, 91830, LE COUDRAY MONTCEAUX (FR); GAUTIER, Claude, 77176, SAVIGNY LE TEMPLE (FR); SANDELIS, Denis, 77370, NANGIS (FR)
(74) Mandataire: Intès, Didier Gérard André

(56) Documents cités:
- EP-A- 1 408 280
- FR-A- 2 678 715
- US-A- 4 180 974
- US-A- 4 322 945
- US-A- 4 914 918
- US-A- 5 329 761
- US-A- 5 894 732
- US-A- 5 956 955
- US-B1- 6 442 940

## Description

La présente invention concerne le domaine des chambres de combustion des turbomachines aéronautiques.

L'invention concerne plus particulièrement le domaine des chambres de combustion de turbomachine comportant un fond de chambre qui présente plusieurs dispositifs d'injection d'air et de carburant, chacun desdits dispositifs comportant, montés selon un axe principal, un bol et un déflecteur formant un bouclier thermique disposé autour dudit bol, ledit bol étant évasé dans le sens de l'écoulement des gaz et possédant une partie annulaire, l'interface entre ledit bol et ledit déflecteur se situant sur ladite partie annulaire.

Dans une chambre de combustion de turbomachine, une réaction de combustion se produit entre le carburant et l'oxygène de l'air. Cela a pour résultat d'expulser à haute vitesse les gaz chauds produits de la combustion qui, en se détendant fournissent une poussée. C'est cette poussée qui permet par exemple de propulser un avion équipé d'une ou plusieurs turbomachines. Typiquement, une chambre de combustion est annulaire et est équipée sur sa circonférence de plusieurs dispositifs d'injection de carburant qui sont montés dans des trous circulaires dans le fond de chambre. Chaque dispositif s'ouvre dans la chambre de combustion à une extrémité appelée bol, ayant la géométrie d'un bol évasé dans le sens de l'écoulement des gaz, l'air pénétrant quant à lui en continu dans la chambre pour se mêler au carburant injecté. Le fond de la chambre de combustion, étant à proximité immédiate des dispositifs d'injection qu'il porte, est soumis à des températures élevées. Un fond de chambre est donc muni, autour de la périphérie de chaque bol, d'un déflecteur, qui protège le fond de chambre des températures élevées, typiquement par création d'une couche isolante d'air entre le déflecteur et le fond de chambre. Pour améliorer le pouvoir isolant de cette couche d'air, il est classique de percer le déflecteur et/ou le fond de chambre d'orifices situés à proximité de la circonférence du bol, ce afin d'entretenir dans cette couche une circulation d'air plus froid venant de l'extérieur de la chambre de combustion.

Dans certaines configurations de chambres de combustion, le bol comporte une partie annulaire sur laquelle vient se fixer la racine du déflecteur, l'autre partie du déflecteur étant une partie plane perpendiculaire à l'axe principal du bol, située en aval du fond de chambre, un tel dispositif étant décrit par le document FR2678715. Mais cette interface entre la partie annulaire du bol et la racine du déflecteur entraîne un échauffement indésirable du fond de chambre par conduction au travers de l'interface.

La présente invention vise à remédier à ces inconvénients.

L'invention vise à proposer une chambre de combustion dont la partie annulaire du bol et le déflecteur ont une géométrie qui permette de refroidir suffisamment le fond de chambre pour que la température de ce dernier reste en dessous d'une valeur critique lors du fonctionnement de la chambre de combustion.

Ce but est atteint par un dispositif tel que décrit dans la revendication 1, grâce au fait qu'au moins une partie de l'interface entre la partie annulaire du bol et le déflecteur se situe vers l'extrémité amont de la partie annulaire dans le sens de l'écoulement des gaz, et qu'une cavité annulaire est définie entre le déflecteur et la partie annulaire en aval de l'interface, des premiers trous débouchant en regard du bord du fond de chambre qui est en contact avec ledit déflecteur étant ménagés dans la partie annulaire, pour entretenir une circulation d'air depuis l'amont vers l'aval dans la cavité annulaire, l'air débouchant des premiers trous venant directement impacter la partie du déflecteur en contact avec le bord du fond de chambre.

Grâce à ces dispositions qui évitent la conception, nécessairement coûteuse et longue, d'un nouveau système de liaison entre le bol et le déflecteur, la racine du déflecteur et la partie annulaire sont donc refroidies par convection par un flux d'air provenant de l'extérieur de la chambre de combustion. On obtient ainsi une homogénéisation de la température du fond de chambre par réduction du flux de conduction grâce à la réduction des surfaces de contact à l'interface et la ventilation du déflecteur avec l'interface bol, et par conséquent une meilleure tenue mécanique. Dans le cas où le bol possède une collerette à son extrémité aval, l'invention permet un refroidissement plus efficace de cette collerette. De plus, le retrait de matière au niveau de l'interface et des trous permet un gain en masse.

Avantageusement, la totalité de l'interface se situe vers l'extrémité amont de la partie annulaire dans le sens de l'écoulement des gaz de sorte que la cavité débouche en aval par un orifice annulaire dans la chambre de combustion.

Cette configuration permet à l'air provenant de l'extérieur de la chambre de combustion de refroidir la partie aval du déflecteur, ce qui limite le dépôt de coke sur le déflecteur.

Avantageusement, la partie annulaire possède vers son extrémité aval une nervure annulaire qui est en contact avec le déflecteur sur une zone de contact qui constitue la partie restante de l'interface, la nervure annulaire étant percée de deuxièmes trous, l'air venant de la cavité annulaire pouvant circuler au travers des deuxièmes trous de manière à refroidir l'extrémité aval du bol.

Cette configuration permet à l'air provenant de l'extérieur de la chambre de combustion de refroidir par impact l'extrémité aval du bol, et la collerette si le bol en comporte une.

Avantageusement, le déflecteur est percé de perçages permettant à l'air venant de la cavité annulaire de déboucher entre le déflecteur et le fond de chambre.

La présence de ces perçages permet à l'air plus froid provenant de l'extérieur de la chambre de combustion de circuler directement entre le fond de chambre et le déflecteur, et donc d'améliorer le pouvoir isolant de la couche d'air située entre le fond de chambre et le déflecteur.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective et en coupe du fond de chambre, du déflecteur et du bol selon l'invention, dans le cas où la totalité de l'interface se situe vers l'extrémité amont de la partie annulaire ;
- la figure 2 est une vue en perspective et en coupe du bol selon l'invention;
- la figure 3 est une vue en perspective et en coupe du fond de chambre, du déflecteur et du bol selon l'invention, dans le cas où le déflecteur est percé de perçages ;
- la figure 4 est une vue en perspective et en coupe du déflecteur selon l'invention, dans le cas où le déflecteur est percé de perçages ;
- la figure 5 est une vue en perspective et en coupe du fond de chambre, du déflecteur et du bol selon l'invention, dans le cas où la partie annulaire possède vers son extrémité aval une nervure annulaire percée de deuxièmes trous, et où le déflecteur est percé de perçages ;
- la figure 6 est une vue en perspective et en coupe du fond de chambre, du déflecteur et du bol selon l'invention, dans le cas où la partie annulaire possède vers son extrémité aval une nervure annulaire percée de deuxièmes trous inclinés par rapport à l'axe du bol, et où le déflecteur est percé de perçages ; et
- la figure 7 est une vue en perspective et en coupe du déflecteur de la figure 6.

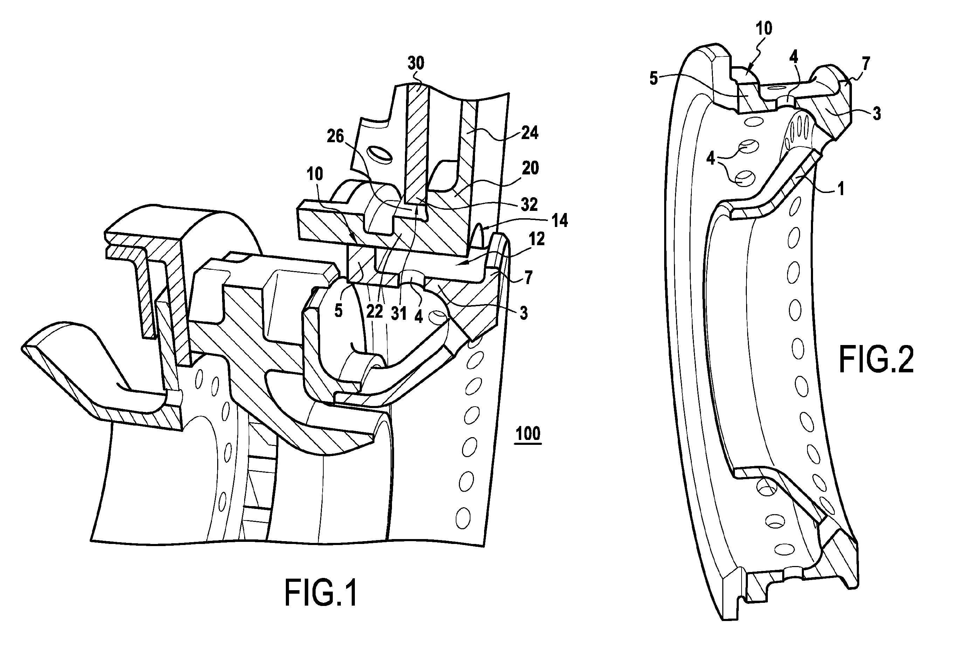

Comme représenté sur les figures 1 et 2, le bol 1 possède une partie annulaire 3 qui s'étend depuis l'extrémité aval du bol 1 vers l'amont de l'écoulement des gaz. Autour du bol 1 est attaché le déflecteur 20, qui possède une racine 22 parallèle à l'axe principal du bol, et en aval de sa racine 22, une partie plane 24 perpendiculaire à l'axe principal du bol. Le déflecteur 20 est monté dans un des trous circulaires 31 du fond de chambre 30. La partie amont 5 de la partie annulaire 3 est en contact avec la racine 22 du déflecteur 20 par une première zone de contact annulaire 10, qui constitue l'interface entre la partie annulaire 3 et le déflecteur 20. Il est ainsi défini une cavité annulaire 12 entre la partie annulaire 3 et la racine 22 du déflecteur 20. La cavité annulaire 12 débouche sur la chambre de combustion 100 par un orifice annulaire 14 délimité par la partie aval plane 24 du déflecteur 20, et l'extrémité aval de la partie annulaire 3. Dans le cas du bol représenté sur la figure 1, l'extrémité aval du bol 1, qui est l'extrémité aval de la partie annulaire 3, possède une collerette 7. Le fond de chambre 30 est en contact avec une face extérieure 26 de la racine 22 du déflecteur 20 par le bord 32 des trous circulaires 31 de fond de chambre. La partie annulaire 3 est percée de premiers trous 4 qui débouchent en regard du bord 32 du fond de chambre 30. Dans l'exemple représenté, les premiers trous 4 sont circulaires et ont leurs axes orientés radialement par rapport à l'axe du bol. Les premiers trous 4 peuvent également être perpendiculaires audit axe principal, avec une inclinaison circonférentielle. Ils peuvent également être en forme de fentes, ou de toute autre forme.

L'air plus froid provenant de l'extérieur de la chambre pénètre dans la cavité annulaire 12 par les premiers trous 4. Grâce à la position des premiers trous 4 en regard du bord 32 du fond de chambre 30, l'air vient directement impacter la partie de la racine 22 du déflecteur, d'où un refroidissement plus efficace de la zone marginale immédiatement adjacente au bord 32 du fond de chambre 30, par rapport à un autre positionnement des premiers trous 4. Cette configuration est avantageuse car la zone marginale immédiatement adjacente au bord 32 est soumis à des températures élevées dues à l'échauffement du bol 1. L'air émerge ensuite de la cavité annulaire 12 par son orifice annulaire 14 dans la chambre de combustion 100. Dans le cas où cette extrémité aval de la partie annulaire 3 est pourvue d'une collerette, le flux d'air émergeant de l'orifice aval 14 est orienté par la collerette 7 dans une direction radiale, ce qui amène le flux d'air à circuler le long de la partie aval plane 24 du déflecteur 20. Cette circulation d'air plus froid le long de la partie aval plane 24 permet de limiter le dépôt de coke sur celle-ci.

La figure 2 illustre la géométrie du bol 1 seul et de sa partie annulaire 3 percée des premiers trous 4.

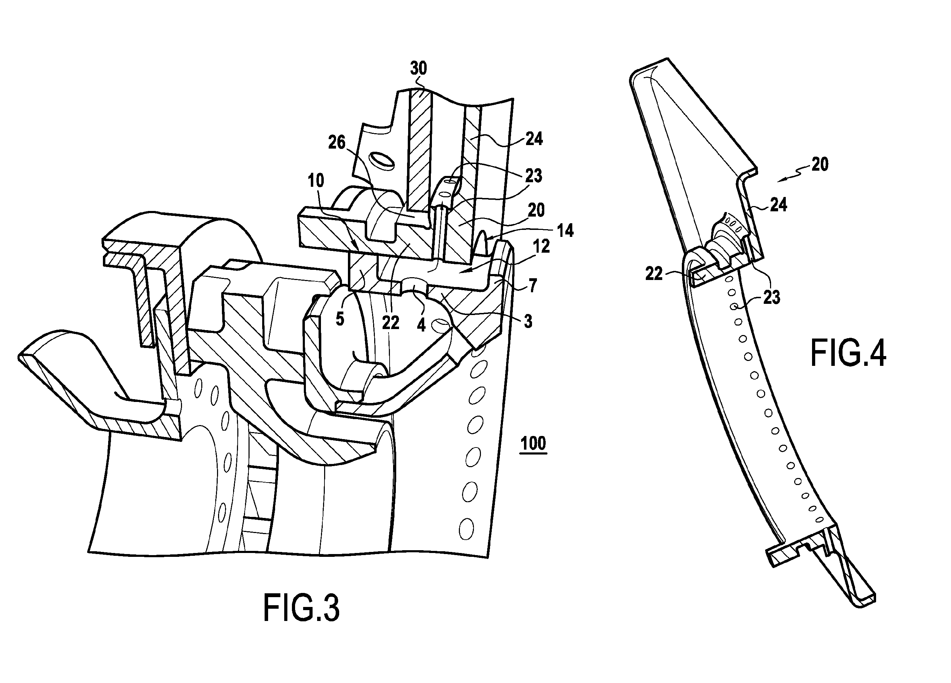

La figure 3 illustre un autre mode de réalisation de l'invention, dans lequel la racine 22 du déflecteur 20 est percée de perçages 23 permettant à l'air venant de la cavité annulaire 12 de circuler dans la partie radialement la plus interne de l'espace situé entre la partie plane 24 du déflecteur et le fond de chambre 30. L'air en provenance de l'extérieur de la chambre de combustion 100, après avoir pénétré dans la cavité annulaire 12 par les premiers trous 4, se divise alors en deux flux : le premier flux, comme dans la configuration de la figure 1, émerge de la cavité annulaire 12 par son orifice annulaire 14. Le deuxième flux émerge de la cavité annulaire 12 par les perçages 23 entre la partie plane 24 du déflecteur et le fond de chambre 30. Ce deuxième flux d'air vient ainsi lécher la partie radialement la plus interne de l'espace situé entre la partie plane 24 du déflecteur et le fond de chambre 30, et diminuer avantageusement la température du fond de chambre 30, ce qui est l'objectif de l'invention. Dans l'exemple représenté, les perçages 23 sont circulaires et ont leurs axes orientés radialement par rapport à l'axe du bol. Les perçages 23 peuvent également être perpendiculaires audit axe principal, avec une inclinaison circonférentielle. Ils peuvent également être en forme de fentes, ou de toute autre forme.

La figure 4 illustre la géométrie du déflecteur 20 seul et de sa racine 22 percée des perçages 23.

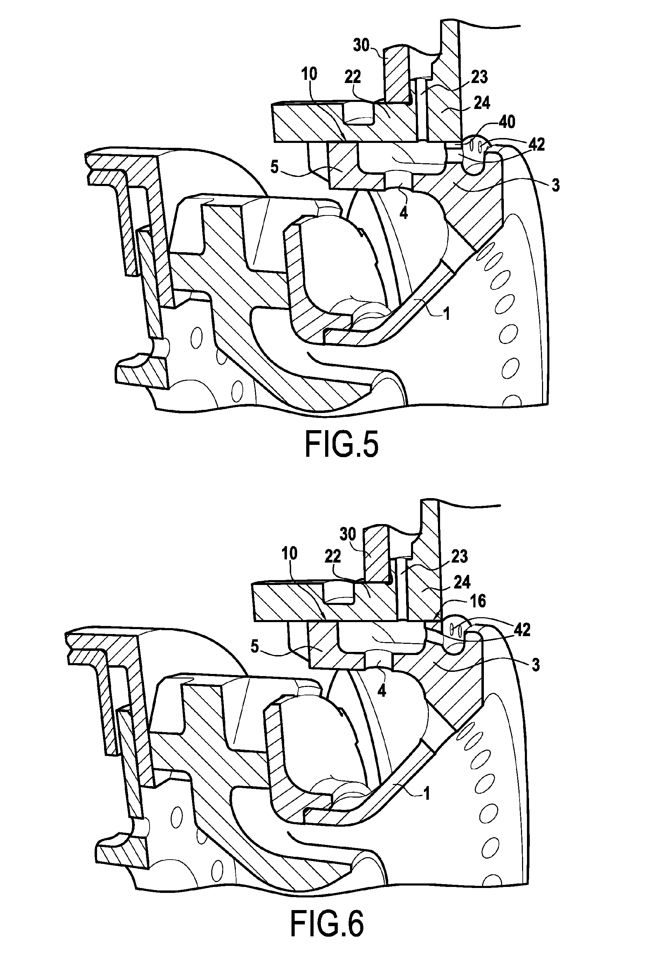

La figure 5 illustre un autre mode de réalisation de l'invention, dans lequel la partie annulaire 3 possède vers son extrémité aval une nervure annulaire 40 qui est en contact avec l'extrémité aval de la racine 22 du déflecteur 20, c'est-à-dire au niveau de la partie plane 24 du déflecteur 20, sur une deuxième zone de contact annulaire 16, qui constitue avec la première zone de contact annulaire 10 l'interface entre la partie annulaire 3 et le déflecteur 20. Cette nervure annulaire 40 est percée de deuxièmes trous 42, par lesquels l'air venant de la cavité annulaire 12 passe pour déboucher dans la chambre de combustion 100, de manière à venir refroidir l'extrémité aval du bol 1. Dans le présent mode de réalisation, l'orifice annulaire 14 des figures 1 et 3 est donc remplacé par l'ensemble des deuxièmes trous 42.

Dans l'exemple de la figure 5, la racine 22 du déflecteur 20 est, comme dans l'exemple de la figure 3, percée de perçages 23. Toutefois, dans une autre configuration (non représentée), l'extrémité aval de la partie annulaire 3 peut être pourvue d'une nervure annulaire 40 percée de deuxièmes trous 42 sans que la racine 22 du déflecteur 20 soit percée des perçages 23. Dans ce cas, il n'y a qu'un seul flux d'air qui sort de la cavité annulaire 12, par les deuxièmes trous 42.

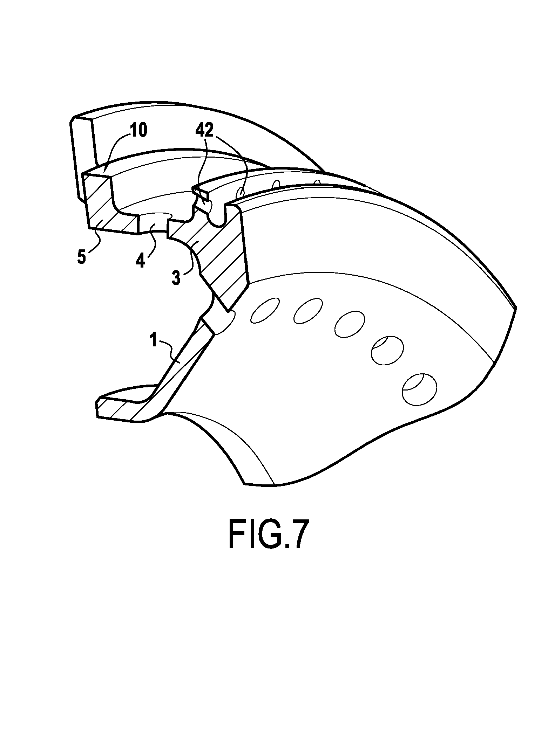

Sur la figure 5, les axes des deuxièmes trous 42 sont parallèles à l'axe principal du bol. Comme illustré sur les figures 6 et 7, les axes des deuxièmes trous 42 peuvent également être inclinés par rapport à l'axe principal du bol. Cela présente l'avantage d'un refroidissement plus efficace de la collerette 7 du bol 1.

Les bols, déflecteurs et fond de chambre représentés sur les figures 1 à 7 le sont seulement à titre d'exemple non limitatif. Ils pourraient avoir une forme différente, dans les limites de la portée de la présente invention.

## Revendications

1. Chambre de combustion (100) de turbomachine comportant un fond de chambre (30) qui présente plusieurs dispositifs d'injection d'air et de carburant, chacun desdits dispositifs comportant un bol (1) et un déflecteur (20) montés selon un axe principal formant un bouclier thermique disposé autour dudit bol, ledit bol étant évasé dans le sens de l'écoulement des gaz et possédant une partie annulaire (3), l'interface (10, 16) entre ledit bol et ledit déflecteur se situant sur ladite partie annulaire, **caractérisée en ce que** au moins une partie de ladite interface se situe vers l'extrémité amont (5) de ladite partie annulaire dans le sens de l'écoulement des gaz, et **en ce qu'**une cavité annulaire (12) est définie entre ledit déflecteur et ladite partie annulaire en aval de ladite interface, des premiers trous (4) débouchant en regard du bord (32) dudit fond de chambre qui est en contact avec ledit déflecteur étant ménagés dans ladite partie annulaire, pour entretenir une circulation d'air depuis l'amont vers l'aval dans ladite cavité annulaire, l'air débouchant des premiers trous (4) venant directement impacter la partie du déflecteur (20) en contact avec ledit bord (32) dudit fond de chambre.

2. Chambre de combustion (100) selon la revendication 1 **caractérisée en ce que** lesdits premiers trous (4) sont circulaires.

3. Chambre de combustion (100) selon la revendication 1 **caractérisée en ce que** lesdits premiers trous (4) sont des fentes.

4. Chambre de combustion (100) selon l'une quelconque des revendications 1 à 3, **caractérisée en ce que** lesdits premiers trous sont orientés radialement par rapport audit axe principal.

5. Chambre de combustion (100) selon l'une quelconque des revendications 1 à 3, **caractérisée en ce que** lesdits premiers trous (4) sont perpendiculaires audit axe principal, avec une inclinaison circonférentielle.

6. Chambre de combustion (100) selon l'une quelconque des revendications 1 à 5, **caractérisée en ce que** la totalité de ladite interface (10) se situe vers l'extrémité amont (5) de ladite partie annulaire (3) dans le sens de l'écoulement des gaz de sorte que ladite cavité (12) débouche par un orifice annulaire (14) dans ladite chambre de combustion.

7. Chambre de combustion (100) selon l'une des revendications 1 à 5 **caractérisée en ce que** ladite partie annulaire (3) possède vers son extrémité aval une nervure annulaire (40) qui est en contact avec ledit déflecteur (20) sur une zone de contact (16) qui constitue la partie restante de ladite interface, ladite nervure annulaire étant percée de deuxièmes trous (42), l'air venant de ladite cavité annulaire (12) pouvant circuler au travers desdits deuxièmes trous de manière à refroidir l'extrémité aval dudit bol (1).

8. Chambre de combustion (100) selon la revendication 7, **caractérisée en ce que** les axes desdits deuxièmes trous (42) sont parallèles audit axe principal.

9. Chambre de combustion (100) selon la revendication 7, **caractérisée en ce que** les axes desdits deuxièmes trous (42) sont inclinés par rapport audit axe principal.

10. Chambre de combustion (100) selon l'une quelconque des revendications 6 à 9, **caractérisée en ce que** ledit déflecteur (20) est percé de perçages (23) permettant à l'air venant de ladite cavité annulaire (12) de déboucher entre ledit déflecteur et ledit fond de chambre (30).

11. Chambre de combustion (100) selon la revendication 10 **caractérisée en ce que** lesdits perçages (23) sont circulaires.

12. Chambre de combustion (100) selon la revendication 10 **caractérisée en ce que** lesdits perçages (23) sont des fentes.

13. Chambre de combustion (100) selon l'une des revendications 10 à 12, **caractérisée en ce que** les axes desdits perçages (23) sont orientés radialement par rapport audit axe principal.

14. Chambre de combustion (100) selon l'une des revendications 10 à 12, **caractérisée en ce que** les axes desdits perçages (23) sont perpendiculaires audit axe principal, avec une inclinaison circonférentielle.

15. Turbomachine comportant une chambre de combustion (100) selon l'une quelconque des revendications 1 à 14.

## Patentansprüche

1. Brennkammer (100) einer Turbomaschine, umfassend einen Kammerdom (30), der mehrere Luft- und Treibstoffeinspritzvorrichtungen aufweist, wobei jede der Vorrichtungen eine Schale (1) und ein Ablenkblech (20) umfasst, die entlang einer Hauptachse angeordnet sind, die ein Wärmeschild, das um die Schale angeordnet ist, bildet, wobei die Schale in Strömungsrichtung der Gase erweitert ist und einen ringförmigen Teil (3) umfasst, wobei sich die Schnittstelle (10, 16) zwischen der Schale und dem Ablenkblech auf dem ringförmigen Teil befindet, **dadurch gekennzeichnet, dass** sich mindestens ein Teil der Schnittstelle zum stromaufwärtgen Ende (5) des ringförmigen Teils hin in Strömungsrichtung der Gase befindet, und dass ein ringförmiger Hohlraum (12) zwischen dem Ablenkblech und dem ringförmigen Teil stromabwärts zu der Schnittstelle definiert ist, wobei erste Löcher (4), die gegenüber dem Rand (32) des Kammerdoms, der mit dem Ablenkblech in Kontakt ist, münden, in dem ringförmigen Teil ausgenommen sind, um eine Luftzirkulation von stromaufwärts nach stromabwärts in dem ringförmigen Hohlraum aufrecht zu erhalten, wobei die durch die ersten Löcher (4) eintreffende Luft direkt auf den Teil des Ablenkblechs (20) trifift, der mit dem Rand (32) des Kammerdoms in Kontakt ist.

2. Brennkammer (100) nach Anspruch 1, **dadurch gekennzeichnet, dass** die ersten Löcher (4) kreisförmig sind.

3. Brennkammer (100) nach Anspruch 1, **dadurch gekennzeichnet, dass** die ersten Löcher (4) Schlitze sind.

4. Brennkammer (100) nach einem der Ansprüche 1 bis 3, **dadurch gekennzeichnet, dass** die ersten Löcher radial in Bezug zur Hauptachse ausgerichtet sind.

5. Brennkammer (100) nach einem der Ansprüche 1 bis 3, **dadurch gekennzeichnet, dass** die ersten Löcher (4) senkrecht zur Hauptachse mit einer Neigung in Umfangsrichtung verlaufen.

6. Brennkammer (100) nach einem der Ansprüche 1 bis 5, **dadurch gekennzeichnet, dass** die Gesamtheit der Schnittstelle (10) zum stromaufwärtigen Ende (5) des ringförmigen Teils (3) in Strömungsrichtung der Gase angeordnet ist, so dass der Hohlraum (12) durch eine ringförmige Öffnung (14) in die Brennkammer mündet.

7. Brennkammer (100) nach einem der Ansprüche 1 bis 5, **dadurch gekennzeichnet, dass** der ringförmige Teil (3) zu seinem stromabwärtigen Ende hin eine Ringnut (40) besitzt, die mit dem Ablenkblech (20) auf einer Kontaktzone (16) in Kontakt ist, die den übrigen Teil der Schnittstelle bildet, wobei die Ringnut mit zweiten Löchern (42) durchbohrt ist, wobei die von dem ringförmigen Hohlraum (12) kommende Luft durch die zweiten Löcher zirkulieren kann, um das stromabwärtige Ende der Schale (1) zu kühlen.

8. Brennkammer (100) nach Anspruch 7, **dadurch gekennzeichnet, dass** die Achsen der zweiten Löcher (42) parallel zur Hauptachse verlaufen.

9. Brennkammer (100) nach Anspruch 7, **dadurch gekennzeichnet, dass** die Achsen der zweiten Löcher (42) in Bezug zur Hauptachse geneigt sind.

10. Brennkammer (100) nach einem der Ansprüche 6 bis 9, **dadurch gekennzeichnet, dass** das Ablenkblech (20) mit Bohrungen (23) durchbohrt ist, die es der von dem ringförmigen Hohlraum (12) kommenden Luft ermöglichen, zwischen dem Ablenkblech und dem Kammerdom (30) einzumünden.

11. Brennkammer (100) nach Anspruch 10, **dadurch gekennzeichnet, dass** die Bohrungen (23) kreisförmig sind.

12. Brennkammer (100) nach Anspruch 10, **dadurch gekennzeichnet, dass** die Bohrungen (23) Schlitze sind.

13. Brennkammer (100) nach einem der Ansprüche 10 bis 12, **dadurch gekennzeichnet, dass** die Achsen der Bohrungen (23) radial in Bezug zur Hauptachse ausgerichtet sind.

14. Brennkammer (100) nach einem der Ansprüche 10 bis 12, **dadurch gekennzeichnet, dass** die Achsen der Bohrungen (23) senkrecht zur Hauptachse mit einer Neigung in Umfangsrichtung verlaufen.

15. Turbomaschine, umfassend eine Brennkammer (100) nach einem der Ansprüche 1 bis 14.

## Claims

1. A turbomachine combustion chamber (100) comprising a chamber end wall (30) presenting a plurality of air and fuel injector devices, each of said devices comprising a bowl (1) and a deflector (20) mounted on a main axis forming a heat shield disposed around said bowl, said bowl flaring in the gas flow direction and possessing an annular portion (3), with the interface (10, 16) between said bowl and said deflector being situated on said annular portion, the combustion chamber being **characterized in that** at least a portion of said interface is situated towards the end (5) of said annular portion that is upstream in the gas flow direction, and **in that** an annular cavity (12) is defined between said deflector and said annular portion downstream from said interface, first holes (4) being formed through said annular portion to open out in register with the edge (32) of said chamber end wall that is in contact with said deflector in order to sustain a flow of air from upstream to downstream in said annular cavity, the air passing through the first holes (4) coming to impact directly against the portion of the deflector (20) that is in contact with said edge (32) of said end wall.

2. A combustion chamber (100) according to claim 1, **characterized in that** said first holes (4) are circular.

3. A combustion chamber (100) according to claim 1, **characterized in that** said first holes (4) are slots.

4. A combustion chamber (100) according to any one of claims 1 to 3, **characterized in that** said first holes are oriented radially relative to said main axis.

5. A combustion chamber (100) according to any one of claims 1 to 3, **characterized in that** said first holes (4) are perpendicular to said main axis, with a circumferential inclination.

6. A combustion chamber (100) according to any one of claims 1 to 5, **characterized in that** all of said interface (10) is situated towards the end (5) of said annular portion (3) that is situated upstream in the gas flow direction, such that said cavity (12) opens out via an annular orifice (14) into said combustion chamber.

7. A combustion chamber (100) according to any one of claims 1 to 5, **characterized in that** said annular portion (3) possesses an annular rib (40) towards its downstream end, which rib is in contact with said deflector (20) over a contact zone (16) that constitutes the remaining portion of said interface, said annular rib being pierced by second holes (42), the air coming from said annular cavity (12) being capable of flowing through said second holes so as to cool the downstream end of said bowl (1).

8. A combustion chamber (100) according to claim 7, **characterized in that** the axes of said second holes (42) are parallel to said main axis.

9. A combustion chamber (100) according to claim 7, **characterized in that** the axes of said second holes (42) are inclined relative to said main axis.

10. A combustion chamber (100) according to any one of claims 6 to 9, **characterized in that** said deflector (20) is pierced by bores (23) enabling air coming from said annular cavity (12) to penetrate between said deflector and said chamber end wall (30).

11. A combustion chamber (100) according to claim 10, **characterized in that** said bores (23) are circular.

12. A combustion chamber (100) according to claim 10, **characterized in that** said bores (23) are slots.

13. A combustion chamber (100) according to any one of claims 10 to 12, **characterized in that** the axes of said bores (23) are oriented radially relative to said main axis.

14. A combustion chamber (100) according to any one of claims 10 to 12, **characterized in that** the axes of said bores (23) are perpendicular to said main axis, with a circumferential inclination.

15. A turbomachine including a combustion chamber (100) according to any one of claims 1 to 14.
